# NEUE EUROPÄISCHE PATENTSCHRIFT

(11) **EP 1 081 114 B2**
(45) Veröffentlichungstag und Bekanntmachung des Hinweises auf die Entscheidung über den Einspruch: **03.08.2005**
(45) Hinweis auf die Patenterteilung: 04.07.2001
(21) Anmeldenummer: 99117271.9
(22) Anmeldetag: 02.09.1999
(51) Int. Cl.: C04B 28/26, C04B 40/06

(54) **Baustoffmischung**
Building Material Mixture
Melange de materiaux de construction

(43) Veröffentlichungstag der Anmeldung: 07.03.2001
(73) Patentinhaber: Heidelberger Bauchemie GmbH Marke Deitermann, 45711 Datteln (DE)
(72) Erfinder: Hesselbarth, Frank Dr., 45659 Recklinghausen (DE); Gholamhossein, Maleki, 45731 Waltrop (DE)
(74) Vertreter: Rohmann, Michael, Dr.

(56) Entgegenhaltungen:
- EP-A- 0 512 269
- EP-A- 0 921 106
- DE-A- 1 571 485
- GB-A- 396 964
- JP-A- 58 140 356
- US-A- 4 780 142
- DATABASE WPI Week 198351 Derwent Publications Ltd., London, GB; AN 1983-847840 XP002129790 & JP 58 194765 A (DENKI K K K K)
- DATABASE WPI Week 198528 Derwent Publications Ltd., London, GB; AN 1985-167830 XP002129791 & JP 60 096562 A (KIKUSUI K K K K)
- DATABASE WPI Week 197726 Derwent Publications Ltd., London, GB; AN 1977-45792y XP002129792 & JP 52 059613 A (KAWASAKI REFRACT)

## Beschreibung

Die Erfindung betrifft eine Baustoffmischung für die Herstellung von chemikalienbeständigen Mörteln. - Die Baustoffmischung weist eine Mehrzahl von Komponenten auf und wird mit Wasser angemacht.

Eine Baustoffmischung der eingangs genannten Art ist aus EP 0 921 106 A1 bekannt. Diese bekannte Baustoffmischung enthält eine Alkalisilicat-Bindemittelkomponente sowie eine Pulverkomponente, die eine Mischung aus einer aktivierten Siliciumdioxidkomponente und einer aktivierten Aluminiumoxykomponente ist. Bei der aktivierten Aluminiumoxykomponente kann es sich um Aluminiumoxid, Aluminiumhydroxid und/oder Aluminiumsilicat handeln. Aktivierung meint hier, daß die Aluminiumoxykomponente beispielsweise durch Wärmebehandlung oder Zermahlen in einen reaktionsfähigeren aktivierten Zustand versetzt wird. Gegenüber anderen bekannten Baustoffmischungen soll insbesondere die chemische Beständigkeit, verbessert werden, indem puzzolane oder latent hydraulische Stoffe wie Flugasche, Hüttensand, Trass oder Ölschiefer durch die aktivierte Aluminiumoxykomponente ersetzt werden. Die Alkalisilicat-Bindemittelkomponente ist in dieser bekannten Baustoffmischung vorzugsweise als Alkalisilicatlösung vorhanden. Nach einer Ausführungsform kann jedoch die Alkalisilicat-Bindemittelkomponente auch pulverförmig in der Baustoffmischung eingesetzt werden. - Obwohl nach EP 0 921 106 A1 die Beständigkeit der Baustoffmischung verbessert werden soll, läßt die chemische Beständigkeit der Mischungen nach dem Anmachen mit Wasser und nach dem Erhärten dennoch zu wünschen übrig. Auch die Beständigkeit der erhärteten Mischung gegenüber hohen Temperaturen läßt zu wünschen übrig.

Aus der Praxis sind fernerhin Baustoffmischungen bekannt, die als wesentlichen Bestandteil einen Zement, beispielsweise Portlandzement, Tonerdezement oder Trasszement enthalten und als Mörtel dienen. Diese auf Zement basierenden Mörtel weisen den beachtlichen Nachteil auf, daß sie in der Regel gegenüber Säuren nicht stabil sind. Fernerhin sind Gipsmörtel bekannt, die jedoch wasserempfindlich sind. Außerdem sind aus der Praxis Baustoffmischungen aus flüssigem Wasserglas und latent hydraulischen Bindemitteln bekannt, die sich jedoch durch den Nachteil auszeichnen, daß sie gegenüber Laugen nicht stabil sind.

Demgegenüber liegt der Erfindung das technische Problem zugrunde, eine Baustoffmischung der eingangs genannten Art anzugeben, die nach dem Anmachen mit Wasser und nach dem Erhärten eine hohe Festigkeit aufweist und beständig ist gegenüber Säuren, Alkalien, Wasser und Lösemitteln sowie eine gute Beständigkeit gegen hohe Temperaturen aufweist.

Zur Lösung dieses technischen Problems lehrt die Erfindung eine Baustoffmischung für die Herstellung von chemikalienbeständigen Mörteln,
wobei die Baustoffmischung 2 bis 7 Gew.-% Wasserglaspulver und zumindest einen Wasserglashärter enthält,
wobei fernerhin über 10 Gew.-% Hüttensand und neben Hüttensand Mikrosilika als Latent hydraulisches Bindemittel enthalten ist, wobei insgesamt 25 bis 45 Gew.-% an latent hydraulischen Bindemittel enthalten sind
und wobei die Baustoffmischung zumindest einen anorganischen Füllstoff aufweist. - Von erfindungserheblicher Bedeutung ist, daß das Wasserglas in der Baustoffmischung pulverförmig eingesetzt wird. Von erfindungswesentlicher Bedeutung ist weiterhin, daß das pulverförmige Wasserglas in der Baustoffmischung mit über 10 Gew.-% Hüttensand als latent hydraulischen Bindemittels kombiniert wird. Die erfindungsgemäße Baustoffmischung wird mit Wasser als Anmachflüssigkeit angemacht. Es liegt jedoch auch im Rahmen der Erfindung, eine Anmachflüssigkeit einzusetzen, die zumindest Im wesentlichen Wasser enthält. - Die nachfolgend angegebenen Gew.-%-Angaben, die sich auf die Zusammensetzung der Baustoffmischung beziehen, meinen die Baustoffmischung vor Zugabe der Anmachflüssigkeit bzw. des Wassers. Es liegt im Rahmen der Erfindung, daß sich die Gew.-%-Angaben aller Komponenten dieser Baustoffmischung jeweils zu 100 Gew.-% addieren.

Bei dem Wasserglaspulver handelt es sich zweckmäßigerweise um Natriumwasserglaspulver und/oder Kaliumwasserglaspulver. Das Modul des Wasserglaspulvers beträgt vorzugsweise 2 bis 4. Modul meint hier das Molverhältnis des Siliciumdioxids zu dem Alkalioxid des Wasserglaspulvers. Für Natriumwasserglaspulver meint Modul also das Molverhältnis von SiO₂ zu Na₂O und für Kaliumwasserglaspulver meint Modul das Molverhältnis von SiO₂ zu K₂O. Im Rahmen der genannten Modulwerte haben Versuche gezeigt, daß ein niedriges Modul sich günstig auf die Verarbeitbarkeit und die chemische Beständigkeit der Baustoffmischung auswirkt. Insoweit liegt das Modul des Wasserglaspulvers sehr bevorzugt zwischen 2 und 3.

Zweckmäßigerweise wird der Wasserglashärter pulverförmig in der Baustoffmischung eingesetzt. Nach bevorzugter Ausführungsform der Erfindung wird als Wasserglashärter zumindest eine Substanz aus der Gruppe "organische Säure, anorganische Säure, Phosphat" eingesetzt. Es liegt im Rahmen der Erfindung, eine schwache und/oder wenig reaktive Säure als Wasserglashärter zu verwenden. So können als Wasserglashärter beispielsweise organische Säuren wie Glutaminsäure und/oder Oxalsäure und/oder Ascorbinsäure eingesetzt werden. Nach bevorzugter Ausführungsform der Erfindung wird als Wasserglashärter zumindest ein Aluminiumphosphat und/oder Aluminiumpolyphosphat verwendet. Zweckmäßigerweise wird als Wasserglashärter zumindest ein kondensiertes Aluminiumphosphat eingesetzt. Sehr bevorzugt sind Aluminiumphosphate mittleren Kondensationsgrades. - Nach bevorzugter Ausführungsform der Erfindung sind in der Baustoffmischung 0,2 bis 4 Gew.-%, vorzugsweise 1 bis 2 Gew.-% des Wasserglashärters enthalten. Nach einer Ausführungsform werden 0,2 bis 2,5 Gew.-% des Wasserglashärters in der Baustoffmischung eingesetzt.

Nach bevorzugter Ausführungsform, ist als latent hydraulisches Bindemittel neben Hüttensand und Mikrosilika zumindest eine Substanz aus der Gruppe "Flugasche," Ziegelmehl, Trassmehl, Ölschiefer" in der Baustoffmischung enthalten. Besondere Bedeutung kommt hierbei den Substanzen "Flugasche, Trassmehl" zu. Die Mahlfeinheit von Hüttensand ist zweckmäßigerweise größer als 4000 cm²/g. Mikrosilika wird im übrigen auch als Silikastaub bezeichnet. Mikrosilika bzw. Silikastaub wird im übrigen im Rahmen der Erfindung als latent hydraulische Komponente definiert, wenngleich in der Literatur mancnmal auch eine Zuordnung zu puzzolanischen Komponenten zu finden ist. Bewährt hat sich der Einsatz einer Kombination von drei latent hydraulischen Komponenten, vorzugsweise Hüttensand und Flugasche und Mikrosilika. Es liegt im Rahmen der Erfindung, daß die Baustoffmischung bevorzugt 30 bis 40 Gew.-% an latent hydraulischem Bindemittel enthält. Wenn im Rahmen der Erfindung Hüttensand lediglich mit Mikrosilika als zusätzlichen latent hydraulischer Komponente eingesetzt wird, so beträgt vorzugsweise das Gewichtsverhältnis des Hüttensandes zu Mikrosilika 6 : 1 bis 1,5 : 1, bevorzugt 6 : 1 bis. 3 : 1 Wenn dagegen im Rahmen der Erfindung Hüttensand und Mikrosilika mit einer dritten latent hydraulischen Komponente eingesetzt wird, so beträgt vorzugsweise das Gewichtsverhältnis des Hüttensandes zu den beiden anderen latent hydraulischen Komponenten 4 : 1 bis 1,5 : 1, bevorzugt 3 : 1 bis 2 : 1.

Vorzugsweise ist als anorganischer Füllstoff zumindest eine Substanz aus der Gruppe "Quarzsand, Schwerspat" in der Baustoffmischung enthaltenQuarzsand meint im Rahmen der Erfindung auch Quarzmehl. - Nach bevorzugter Ausführungsform der Erfindung sind in der Baustoffmischung 35 bis 65 Gew.-%, sehr bevorzugt 40 bis 60 Gew.-% des anorganischen Füllstoffes vorhanden.

Nach einer bevorzugten Ausführungsform der Erfindung ist in der Baustoffmischung zumindest ein Farbpigment enthalten. Auf diese Weise können in sehr vorteilhafter Weise farbige Produkte bzw. Mörtel erhalten werden. Es liegt im Rahmen der Erfindung, anorganische Farbpigmente auf Basis von Eisenoxid und/oder Titandioxid einzusetzen. Nach bevorzugter Ausführungsform sind in der Baustoffmischung 2 bis 10 Gew.-%, vorzugsweise 3 bis 5 Gew.-% zumindest eines Farbpigmentes enthalten.

Vorzugsweise ist in der Baustoffmischung zumindest ein hydraulisches Bindemittel enthalten. Es liegt im Rahmen der Erfindung, einen Zement als hydrauüsches Bindemittel einzusetzen. Zweckmäßigerweise wird dabei zumindest ein Zement aus der Gruppe "Tonerdeschmelzzement, Portlandzement, Trasszement" in der Baustoffmischung verwendet. Vorzugsweise enthält die Baustoffmischung 2 bis 6 Gew.-% eines hydraulischen Bindemittels, insbesondere eines Zementes.

Nach bevorzugter Ausführungsform werden in der Baustoffmischung zusätzlich Steuerungsmittel und/oder weitere Additive eingesetzt. Grundsätzlich können 0,1 bis 10 Gew.-%, bevorzugt 1 bis 3 Gew.-% an Steuerungsmitteln und/oder Additiven in der Baustoffmischung enthalten sein. Steuerungsmittel und/oder Additive meintinsbesondere Hydrophobierungsmittel, Entschäumer, Verzögerer, Wasserretentionsmittel und Thixotropiermittel. Vorzugsweise weist die Baustoffmischung zumindest ein Hydrophobierungsmittel auf. Zweckmäßigerweise wird zumindest ein Hydrophobierungsmittel aus der Gruppe "Silikonpulver, Stearinpulver, Stearat, Oleat" für die Baustoffmischung gewählt. Bevorzugt enthält die Baustoffmischung 0,1 Gew.-% bis 1,5 Gew.-%, sehr bevorzugt 0,2 Gew.-% bis 1 Gew.-% an Hydrophobierungsmittel.

Es liegt im. Rahmen der Erfindung, daß die Baustoffmischung einen Entschäumer enthält, der vorzugsweise pulverförmig eingesetzt wird. Fernerhin liegt es im Rahmen der Erfindung, daß in der Baustoffmischung ein geeigneter Verzögerer eingesetzt wird. Nach einer Ausführungsform weist die Baustoffmischung zumindest ein Wasserretentionsmittel auf. Erfindungsgemäß kann zumindest ein Wasserretentionsmittel aus der Gruppe "Methylcellulose, Hydroxyethylcellulose, höherwertiger Alkohol" gewählt werden. Beispielsweise wird Neopentylglykol als Wasserretentionsmittel eingesetzt. - Es liegt weiterhin im Rahmen der Erfindung, daß die Baustoffmischung ein Thixotropiermittel enthält. Bei dem Thixotropiermittel kann es sich um pyrogene Kieselsäure und/oder um Bentonite handeln.

Der Erfindung liegt die Erkenntnis zugrunde, daß eine Baustoffmischung mit beachtlichen nachfolgend erläuterten Vorteilen erhalten werden kann, wenn mit der erfindungsgemäßen Merkmalskombination gearbeitet wird. Hierbei kommt es insbesondere darauf an, daß einerseits pulverförmiges Wasserglas eingesetzt wird und in Kombination damit über 10 Gew.-% Hüttensand als latent hydraulischen Bindemittels verwendet werden. Eine wesentliche Rolle spielt im Rahmen dieser Kombination auch der Einsatz des Wasserglashärters, der vorzugsweise ebenfalls pulverförmig erfolgt. Nach dem Anmachen der Baustoffmischung mit Wasser und nach dem Erhärten werden sehr hohe Festigkeiten erzielt und der erhärtete Mörtel ist überraschend beständig sowohl gegen Säuren als auch gegen alkalische Lösungen und auch gegen Wasser und Lösemittel. Fernerhin ist eine Beständigkeit gegen eine Vielzahl weiterer Chemikalien, insbesondere auch aggressive Chemikalien, gegeben. Von besonderer Bedeutung ist auch, daß die erfindungsgemäße Baustoffmischung einfach verarbeitbar ist und insbesondere mit herkömmlicher Technik verarbeitbarist. Die Herstellung der erfindungsgemäßen Baustoffmischung ist mit geringem Aufwand und somit relativ kostengünstig möglich. Hervorzuheben ist vor allem, daß sich der resultierende Baustoff durch eine überraschend hohe Temperaturbeständigkeit auszeichnet. Der Baustoff ist beispielsweise bis zu Temperaturen in der Größenordnung von 500° C ohne weiteres beständig. Mit der erfindungsgemäßen Baustoffmischung kann ein Mörtel bereitgestellt werden, der in weiten pH-Bereichen säure- und laugenstabil ist.

Insoweit kann ein Werktrockenmörtel bereitgestellt werden, für den lediglich Wasser als Anmachflüssigkeit notwenig ist. Mit der erfindungsgemäßen Baustoffmischung können Fliesenkleber, Fugenmörtel sowie weitere Mörtel- und Spachtelprodukte und Bodenbeschichtungen hergestellt werden. Der Begriff "Mörtel" meint im Rahmen der Erfindung somit auch Kleber, Fugenfüller, Spachtelprodukte, Beschichtungsmittel und dergleichen Produkte. Die Baustoffmischung kann grundsätzlich einfach und problemlos auf alle mineralischen und metallischen Untergründe aufgebracht werden. Die Verarbeitung der Baustoffmischung kann wahlweise mittels Aufstreichen, Aufschlämmen, Aufspachteln, Aufziehen und dergleichen erfolgen. Möglich ist auch eine maschinelle Verarbeitung mit handelsüblichen Schneckenförderungsgeräten. Insoweitist zu betonen, daß sich die Baustoffmischung bei allen Verarbeitungsarten durch eine sehr einfache problemlose Verarbeitung auszeichnet. Die erfindungsgemäße Baustoffmischung kann in den verschiedensten Bereichen eingesetzt werden, unter anderem auch im Feuerfestbereich beispielsweise für Schornsteine. Ein Einsatz als starre Dichtungsschlämme liegt ebenfalls im Rahmen der Erfindung. Die Baustoffmischung kann als Beschichtung oder als Reparaturmörtel bzw. Reparaturspachtel auch im Bereich der Abwasserentsorgung, beispielsweise für den Kanalbau, für Abwasserrohre, für die Abwasseraufbereitung und für Öl- und Fettabscheider eingesetzt werden. Die Verwendung der Baustoffmischung im Rahmen der Industriebodensanierung und -beschichtung liegt ebenfalls im Rahmen der Erfindung. Überraschenderweise ist die erfindungsgemäße Baustoffmischung so vielseitig einsetzbar und überraschenderweise zeichnet sich die Baustoffmischung in allen Einsatzgebieten durch ihre hervorragende Chemikalienbeständigkeit, insbesondere gegenüber sowohl sauren als auch alkalischen Lösungen aus.

Im Gegensatz zu der eingangs erläuterten bekannten Baustoffmischung nach EP 0 921 106 A1 kann erfindungsgemäß auf den Zusatz einer aktivierten Aluminiumoxykomponente verzichtet werden. Eine aufwendige und somit kostenintensive Aktivierung dieser Aluminiumoxykomponente, beispielsweise durch eine Wärmebehandlung, kann im Rahmen der Erfindung somit entfallen. Nach EP 0 921 106 A1 soll eine latent hydraulische Komponente einer bekannten Baustoffmischung durch die genannte Aluminiumoxykomponente ersetzt werden. Erfindungsgemäß ist es dagegen zwingend notwendig, daß über 10 Gew.-% eines latent hydraulischen Bindemittels in der Baustoffmischung vorliegen. Mit der erfindungsgemäßen Merkmalskombination können im Gegensatz zu den Maßnahmen nach EP 0 921 106 A1 wesentlich chemikalienbeständigere und preiswertere Baustöffmischungen erzielt werden.

Die Erfindung wird nachfolgend anhand eines Ausführungsbeispiels näher erläutert: Die erfindungsgemäße Baustoffmischung enthält 2 bis 7 Gew.-% Wasserglaspulver, insbesondere Natriumwasserglaspulver, sehr bevorzugt 3 bis 7 Gew.-% Wasserglaspulver, insbesondere Natriumwasserglaspulver. Fernerhin sind in der Baustoffmischung 0,2 bis 4 Gew.-%, bevorzugt 0,5 bis 2 Gew.-% eines pulverförmigen Wasserglashärters enthalten. Zweckmäßigerweise wird Aluminiumpolyphosphat als Wasserglashärter eingesetzt. Die Baustoffmischung enthält weiterhin 25 bis 45 Gew.-% an latent hydraulischen Bindemittel, wobei mindestens 10 Gew.-% Hüttensand und zusätzlich Mikrosilika enthalten sind. Die Baustoffmischung enthält vorzugsweise 35 bis 65 Gew.-% zumindest eines anorganischen Füllstoffes. Bei dem anorganischen Füllstoff handelt es sich beispielsweise um Quarzsand. Es liegt im Rahmen der Erfindung, daß die Baustoffmischung zusätzlich 2 bis 10 Gew.-%, vorzugsweise 3 bis 5 Gew.-% zumindest eines Farbpigmentes enthält. Es liegt außerdem im Rahmen der Erfindung, daß die Baustoffmischung 0,1 bis 10 Gew.-%, bevorzugt 1 bis 3 Gew.-% zumindest eines Steuerungsmittels und/oder zumindest eines Additives enthält. Vorzugsweise ist in der Baustoffmischung zumindest ein Hydrophobierungsmittel enthalten. Beispielsweise handelt es sich bei dem Hydrophobierungsmittel um Stearinpulver. Vorzugsweise weist die Baustoffmischung zumindest einen Zement als hydraulisches Bindemittel auf. Es kann sich hierbei um Tonerdeschmelzzement handeln. Bevorzugt werden 2 bis 6 Gew.-% des Zementes in der Baustoffmischung eingesetzt.

## Patentansprüche

1. Baustoffmischung für die Herstellung von chemikalienbeständigen Mörteln,
wobei die Baustoffmischung 2 bis 7 Gew.-% Wasserglaspulver und zumindest einen Wasserglashärter enthält,
wobei fernerhin über 10 Gew.-% Hüttensand und neben Hüttensand Mikrosilika als latent hydraulisches Bindemittel enthalten ist,
wobei insgesamt 25 bis 45 Gew.-% an latent hydraulischem Bindemittel enthalten sind und
wobei die Baustoffmischung zumindest einen anorganischen Füllstoff aufweist.

2. Baustoffmischung nach Anspruch 1, wobei 3 bis 7 Gew.-% Wasserglaspulver vorgesehen sind.

3. Baustoffmischung nach einem der Ansprüche 1 oder 2, wobei als Wasserglashärter zumindest eine Substanz aus der Gruppe "organische Säure, anorganische Säure, Phosphat" eingesetzt wird.

4. Baustoffmischung nach einem der Ansprüche 1 bis 3, wobei 0,2 bis 4 Gew.-%, vorzugsweise 1 bis 2 Gew.-% des Wasserglashärters in der Mischung enthalten sind.

5. Baustoffmischung nach einem der Ansprüche 1 bis 4, wobei als anorganischer Füllstoff zumindest eine Substanz aus der Gruppe "Quarzsand, Schwerspat" in der Mischung enthalten sind.

6. Baustoffmischung nach einem der Ansprüche 1 bis 5, wobei zumindest ein Farbpigment enthalten ist.

7. Baustoffmischung nach Anspruch 6, wobei 2 bis 10 Gew.-%, vorzugsweise 3 bis 5 Gew.-%, Farbpigment in der Mischung enthalten sind.

## Claims

1. A construction material mixture for the manufacture of chemically resistant cements, wherein the mixture contains 2 to 7 wt% water glass powder and at least one water glass curing agent, wherein further more than 10 wt% granulated blast-fumace slag and, in addition to that, micro-silica is contained as latent hydraulic binding agent, wherein in total 25 to 45 wt% of latent hydraulic binding agent are contained, and wherein the construction material mixture contains at least one inorganic filler.

2. The construction material mixture according to Claim 1, wherein 3 to 7 wt% water glass powder are provided.

3. The construction material mixture according to one of Claims 1 or 2, wherein as water glass curing agent a substance from the group "organic acid, inorganic acid, phosphate" is utilized.

4. The construction material mixture according to one of Claims 1 through 3, wherein 0.2 to 4 wt%, preferably 1 to 2 wt% of water glass curing agent, are contained in the mixture.

5. The construction material mixture according to one of Claims 1 through 4, wherein as inorganic filler at least one substance from the group "silica sand, heavy spar are contained in the mixture.

6. The construction material mixture according to one of Claims 1 through 5, wherein at least one coloring pigment is contained.

7. The construction material mixture according to Claim 6, wherein 2 to 10 wt%, preferably 3 to 5 wt%, coloring pigment are contained in the mixture.

## Revendications

1. Mélange formant matériau de construction pour la fabrication de mortiers stables aux produits chimiques,
**caractérisé en ce que** le mélange formant matériau de construction contient de 2 à 7 % en poids de silicate alcalin et au moins un durcisseur à base de silicate alcalin,
**caractérisé en ce qu'**il contient en outre plus de 10 % en poids de sable de fonderie, et conjointement au sable de fonderie, de la micro-silice en tant que liant hydraulique sous forme latente,
la teneur en liant hydraulique sous forme latente étant au total de 25 à 45 % en poids,
et le mélange formant matériau de construction présentant au moins une charge minérale de remplissage.

2. Mélange formant matériau de construction selon la revendication 1, **caractérisé en ce qu'**il est prévu de 3 à 7 % en poids de poudre de silicate alcalin.

3. Mélange formant matériau de construction selon l'une des revendications 1 ou 2, **caractérisé en ce qu'**en tant que durcisseur à base de silicate alcalin on emploie au moins une substance choisie dans le groupe composé d'acides organiques, d'acides minéraux et de phosphates.

4. Mélange formant matériau de construction selon l'une des revendications 1 à 3, **caractérisé en ce que** 0,2 à 4 % en poids, de préférence 1 à 2 % en poids du durcisseur à base de silicate alcalin sont contenus dans le mélange.

5. Mélange formant matériau de construction selon l'une des revendications 1 à 4, **caractérisé en ce qu'**en tant que charge minérale de remplissage est contenue dans le mélange au moins une substance choisie dans le groupe composé du sable quartzique et du sulfate de baryum.

6. Mélange formant matériau de construction selon l'une des revendications 1 à 5, **caractérisé en ce qu'**au moins un pigment coloré est contenu dans le mélange.

7. Mélange formant matériau de construction selon la revendication 6, **caractérisé en ce que** 2 à 10 % en poids, de préférence 3 à 5 % en poids, de pigment coloré sont contenus dans le mélange.
